# EUROPEAN PATENT APPLICATION

(11) **EP 4 706 943 A1**
(43) Date of publication of application: **11.03.2026**
(21) Application number: 25193105.1
(22) Date of filing: 31.07.2025
(51) Int. Cl.: B29C 64/245, B29C 64/232, B29C 64/106, B33Y 10/00, B33Y 30/00, B22F 12/00, B22F 12/30

(54) **ADDITIVE MANUFACTURING APPARATUS AND METHOD**

(30) Priority: 02.08.2024 IT 202400018136
(71) Applicant: C.M.S. S.p.A., 24019 Zogno (BG) (IT)
(72) Inventor: BARERA, Giacomo, 20010 Bernate Ticino (MI) (IT); VIMERCATI, Claudio Giuseppe, 24010 Costa Serina (BG) (IT); BARATELLI, Cristian, 24040 Filago (BG) (IT)
(74) Representative: Luppi Intellectual Property S.r.l.

(57) **Abstract**

An additive manufacturing apparatus and method are disclosed, with a first horizontal work plane, a second vertical work plane, a gantry movable above said first work plane along a horizontal axis, a dispensing unit configured to dispense a bead of material and movable on said gantry along a vertical plane, and one, two, three, or more support portions arranged in said first work plane, one after the other along said horizontal axis and movable with at least one component of vertical motion, independently of one another. Thus, as the dispensing unit gradually forms, layer by layer, a workpiece cantilevered from said second work plane, the support portions are raised one after the other to support positions where each of them contributes to supporting the weight of the workpiece being formed, to produce long parts without increasing the height of the production apparatus.

## Description

### Background of the Invention

The invention concerns an additive manufacturing apparatus and method, particularly for producing objects through three-dimensional printing, in various materials such as, for example, filled or unfilled thermoplastics (particularly PLA, PP, PET, PA, ABS, PC, PEI, PESU, etc.), composite materials, carbon fiber, aluminum, light alloys, metals, etc.

The invention may be implemented, in particular, using a CNC machine with three, four, or more controlled machining axes.

Specifically, but not exclusively, the invention can be applied in the field of Large Format Additive Manufacturing (LFAM or LSAM), with the aim of producing long parts without increasing the height of the machine.

### Prior art

Patent publication WO 2018/147957 A1 shows an additive manufacturing apparatus according to the preamble of the first claim. This known apparatus comprises a movable vertical work plane located above a fixed horizontal work plane. A cooling plate is located on the front edge of the horizontal work plane. The dispensing unit operates in a position external to the front edge of the cooling plate. The dispensing unit deposits each vertical layer onto the vertical work plane flush with the front edge of the cooling plate, and each time a new layer is printed, the vertical work plane moves away from the front edge of the cooling plate. The vertical work plane is moved by conveyor belts, using the length of the horizontal work plane to print a relatively long part. After printing, the finished, solid part can be separated from the vertical work plane and rest completely on the conveyor belts.

The prior art can be improved in several respects. First, the contact interaction between the conveyor belts and the workpiece being produced creates a risk of deforming or damaging the workpiece due to sliding friction. Second, the aforementioned prior art apparatus requires the use of high-power actuators, especially for the production of very long and heavy objects. Furthermore, it would be desirable to avoid the structural complication posed by the system for moving the vertical work plane using conveyor belts.

### Summary of the Invention

An object of the invention is to provide an apparatus and method capable of satisfying one or more of the aforementioned requirements of the prior art.

An object of the invention is to reduce or eliminate the risk of deforming or damaging the piece being produced.

An object of the invention is to provide an apparatus and method in which the forces acting to perform additive manufacturing are relatively low, even when producing long and heavy objects.

An object of the invention is to provide an apparatus and method for the additive manufacturing of relatively long parts using a relatively low-height machine.

An object of the invention is to propose an alternative solution to the prior art for the additive manufacturing of objects.

One advantage is allowing for the additive manufacturing of a part on a vertical work plane, thus taking advantage of the machine's horizontal length, without the risk that the size of the material dispensing unit could collide or interfere, during its movement to deposit the material, with parts of the machine, particularly the horizontal work plane.

One advantage is to provide an additive manufacturing apparatus that is simple and economical in construction.

These purposes and advantages, and others, are achieved by an apparatus and a method according to one or more of the claims listed below.

In one example, an additive manufacturing apparatus comprises a first (horizontal) work plane, a second (vertical) work plane, a gantry movable above the first (horizontal) work plane along a (horizontal) X-axis, a dispensing unit carried by said gantry and movable at least along a plane parallel to the second (vertical) work plane, and at least one support portion arranged in the first (horizontal) work plane and movable with at least one vertical motion component. It is possible to provide, in particular, the arrangement of two or three or four or more than four support portions arranged in the first (horizontal) work plane, one after the other in the direction of said (horizontal) X-axis, and movable with at least one vertical motion component independently of each other.

In operation, the dispensing unit delivers a bead of material to the second (vertical) work plane to deposit a plurality of layers of material of the piece to be produced. After each layer, the movable gantry moves along the X-axis (horizontal) so as to produce the piece layer by layer while leaving the second (vertical) work plane fixed. During the production of the piece, which is cantilevered from the second (vertical) work plane, the various support portions are positioned, one after the other, as the piece grows in the direction of the X-axis (horizontal), in a respective raised support position in which each support portion helps to support a portion of the weight of the piece being produced on the second (vertical) work plane, to produce a long piece (extended in length in the direction of the X-axis) without the need to increase the height of the apparatus.

In practice, during the production of the part, when the dispensing unit moves on a vertical plane to deposit a layer of material, the support portion that is located below the dispensing unit is positioned in a lowered, non-interference position where it does not interfere with the lower portion of the dispensing unit. As the production of the part proceeds layer by layer, the dispensing unit progressively moves in a horizontal direction, moving away from the support portion that was previously located below the dispensing unit, so that this support portion can be raised to be positioned in a higher support position, where it can support the part of the part that was previously produced by the dispensing unit, without the risk of interfering with the dispensing unit that has since moved away.

The various support portions may be distributed spaced apart along the X-axis at regular intervals, so that each support portion, once raised into the support position, can effectively support the weight of the piece being produced, which extends along the X-axis and cantilevers out from the vertical work plane. This ensures that the material deposited for the production of the piece does not detach under its own weight and, at the same time, avoids the risk of interfering with the dispensing unit which moves to deposit the layers of material.

The mutual distance between two consecutive support portions may, in particular, be between 200 and 400 mm, for example equal to approximately 300 mm. The support portions may be distributed along the entire length of the horizontal X-axis of the CNC machine, for example up to approximately 10 meters, so the length of the producible part will not be limited by the height of the CNC machine, which can be significantly less than the length in the X-axis direction.

It should be noted that, by virtue of the support from below provided by the support portions that can be positioned from the bottom upwards, no sliding friction is generated between the aforementioned support portions and the surfaces of the additively manufactured part, thus eliminating, compared to the prior art, the risk of damage caused by sliding and/or scraping elements in the horizontal direction.

### Brief description of the drawings

The invention may be better understood and implemented with reference to the attached drawings, which illustrate at least one exemplary and non-limiting embodiment thereof, in which:

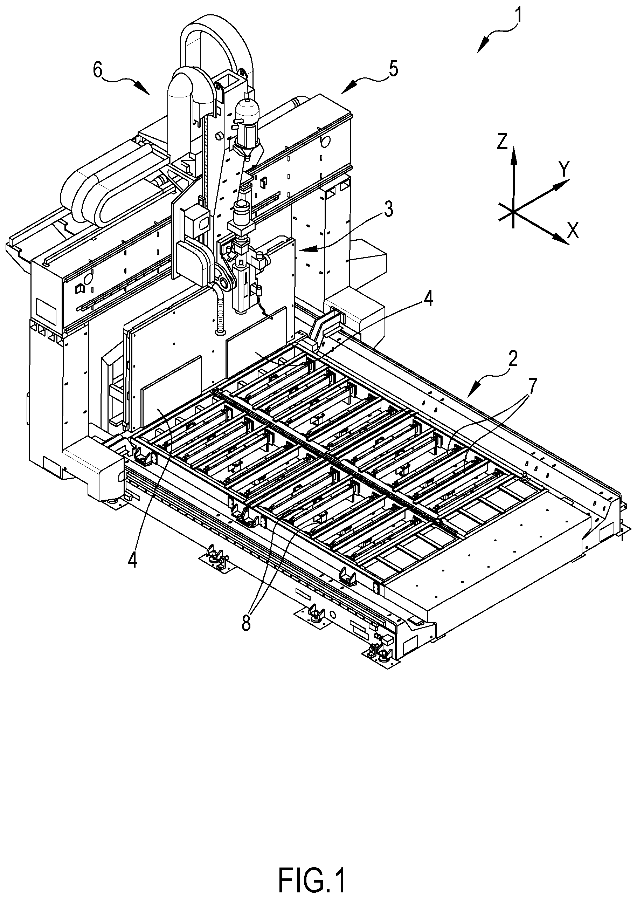

- Figure 1 is an axonometric view of an example of an additive manufacturing apparatus constructed in accordance with the present invention;

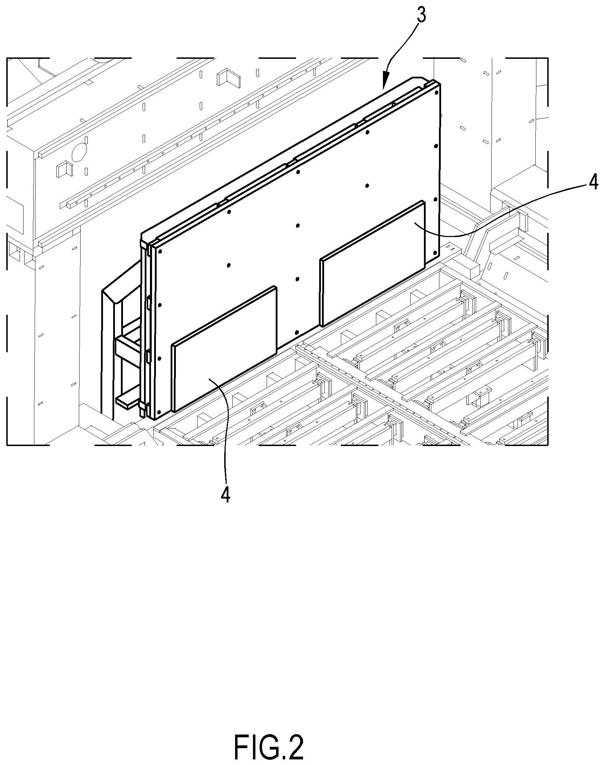

- Figure 2 is an axonometric view of the second work plane, or vertical work plane, of the apparatus of Figure 1;

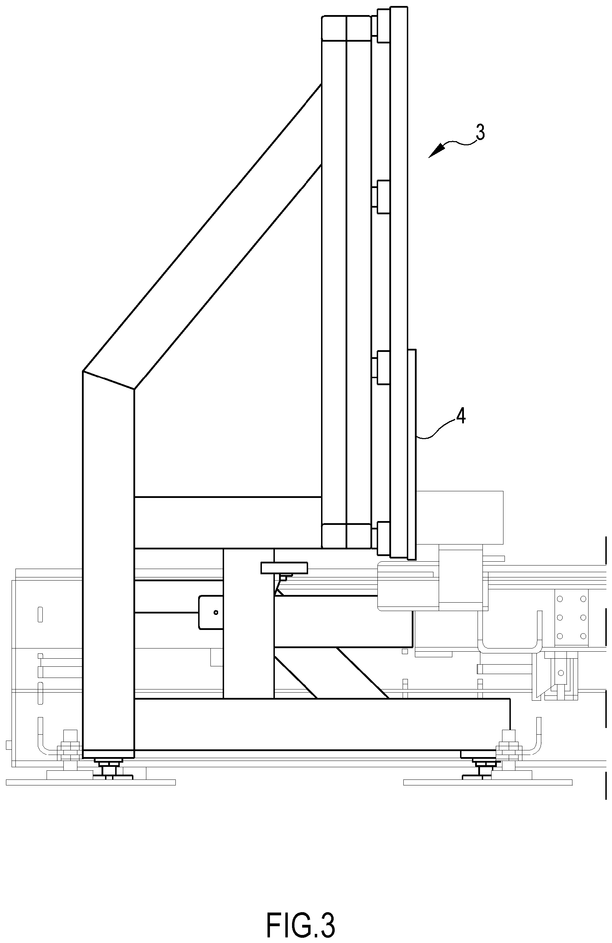

- Figure 3 is a vertical elevation side view of the second work plane, or vertical work plane, of Figure 2;

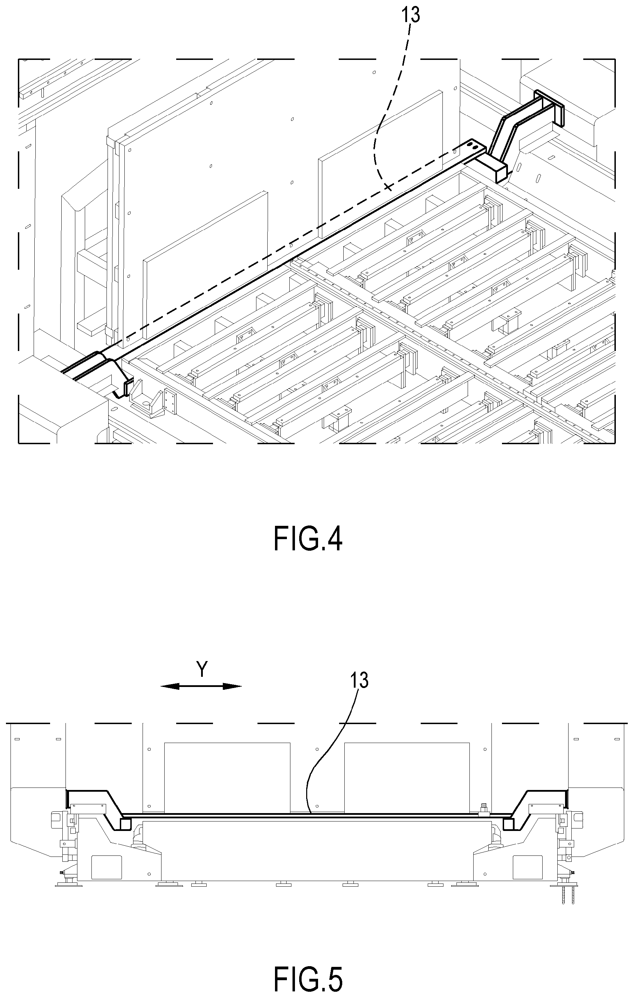

- Figure 4 is an axonometric view of the support element carried by the movable gantry of the apparatus of Figure 1;
- Figure 5 is a vertical elevation front view of the support element of Figure 4;

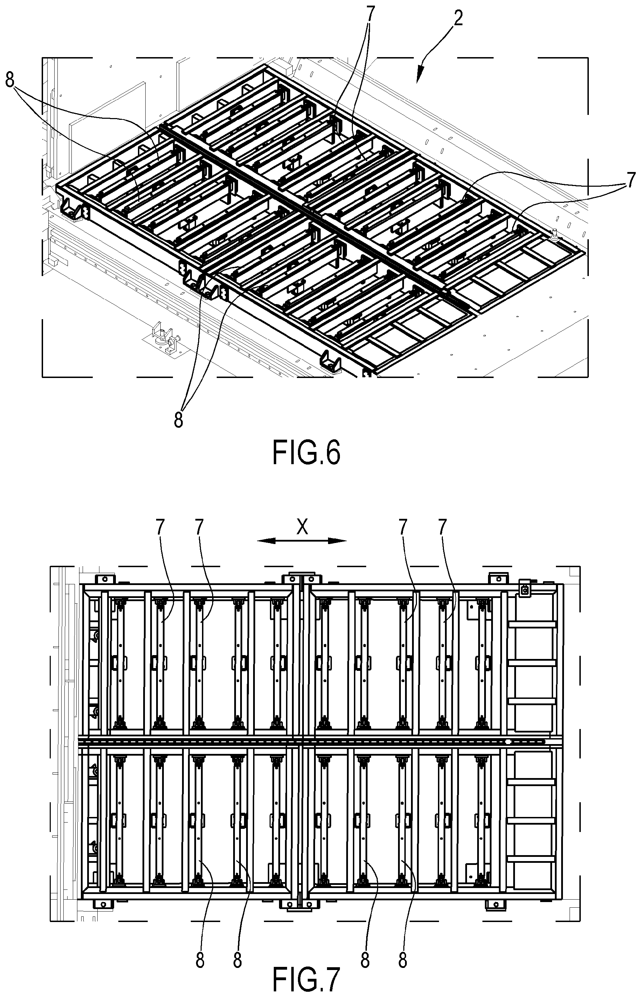

- Figure 6 is an axonometric view of the first work plane, or horizontal work plane, of the apparatus shown in Figure 1, equipped with the various support portions that move vertically to support the workpiece being formed;
- Figure 7 is a top plan view of the first work plane, or horizontal work plane, shown in Figure 6;
- Figure 8 is a vertical side elevation view of the first work plane, or horizontal work plane, shown in Figure 6;
- Figure 9 is a partially sectioned vertical side elevation view of a detail of the apparatus shown in Figure 1, showing the horizontally movable support body and the support element shown in Figure 4;

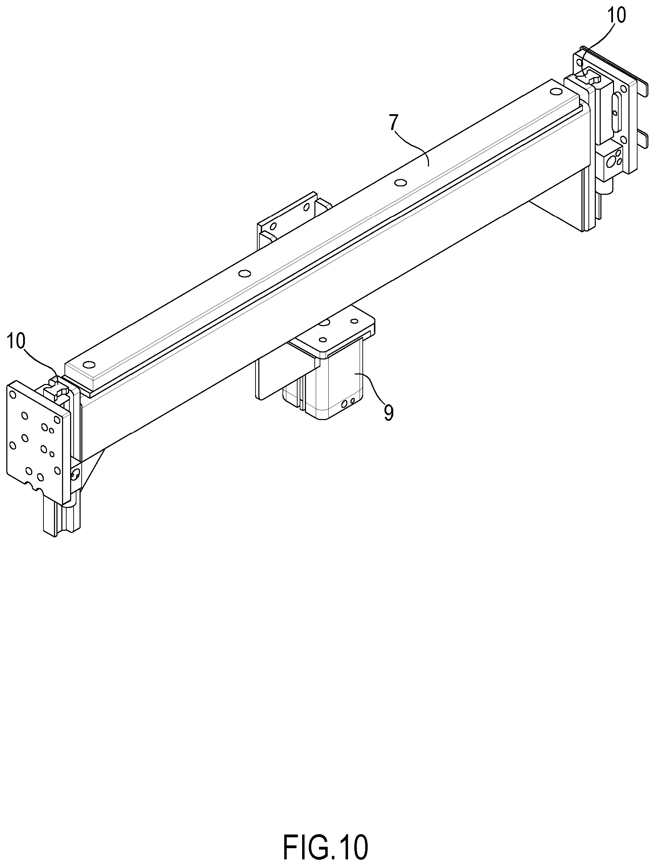

- Figure 10 is an axonometric view of a single vertically movable support portion located on the first work plane, or horizontal work plane, of the apparatus shown in Figure 1;

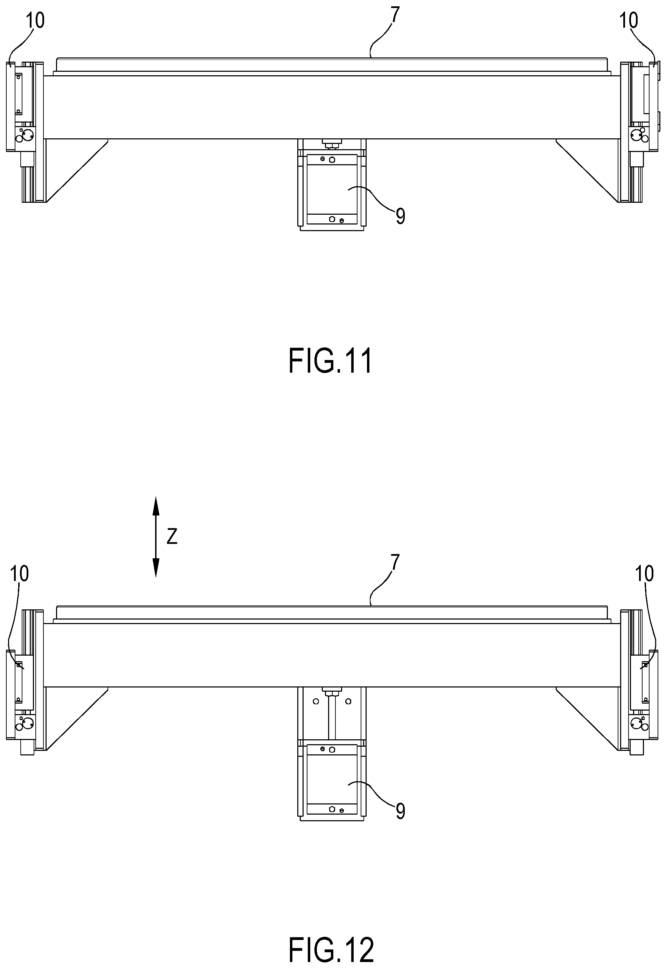

- Figure 11 is a vertical front elevation view of the support portion of Figure 10 in a lowered rest position;
- Figure 12 is a vertical front elevation view of the support portion of Figure 11 in a raised workpiece support position.

### Detailed description

With reference to the above-mentioned figures, reference 1 indicates an additive manufacturing apparatus, specifically for the production of parts via 3D printing. Additive manufacturing may be carried out using various materials, such as thermoplastics (PLA, PP, PET, PA, ABS, PC, PEI, PESU, etc.), composites, carbon fiber, aluminum, light alloys, metals, etc. Apparatus 1 may include, in particular, a CNC machine with three, four, or five machining axes. Apparatus 1 may be used, in particular, for the production of long parts in the Large Format Additive Manufacturing (LFAM or LSAM) sector.

In this specific example, the additive manufacturing technique involves the melting of a material (thermoplastic, filled or unfilled) which is applied in layers to produce a final part. This may be achieved, for example, by passing a continuous, thin strand of thermoplastic material (filled or unfilled) through a heated nozzle, or by passing the meltable material (thermoplastic, filled or unfilled) into an extruder or plasticizing assembly that melts the material and applies it through an extrusion nozzle, producing the part.

The additive manufacturing apparatus 1 comprises a first work plane 2, in particular a horizontal work plane. The first work plane 2 may be oriented, in particular, along an XY plane.

The additive manufacturing apparatus 1 comprises a second work plane 3, in particular a vertical work plane. The second work plane 3 may be, in particular, oriented at an angle (e.g., at a right angle) to the first work plane 2. The second work plane 3 may be oriented, in particular, along a YZ plane. The second work plane 3 is equipped with a self-supporting frame.

The second work plane 3 includes at least one sacrificial panel 4 (e.g., a wooden panel) fixed to the second work plane 3 and to which one or more appendages of material from the first layer of the workpiece being produced on the second work plane 3 will be fixed, for example using self-tapping screws, as explained below.

In particular, it is possible to provide that, in the CNC machine, the X-axis is horizontal and/or the Y-axis is horizontal and/or the Z-axis is vertical. In particular, it is possible to predict that the X-axis is orthogonal to the Y-axis and/or that the X-axis is orthogonal to the Z-axis and/or that the Y-axis is orthogonal to the Z-axis.

Additive manufacturing apparatus 1 uses the controlled axes of the CNC machine to perform horizontal 3D printing, to exploit the largest dimension of apparatus 1 (i.e., the one along the horizontal X-axis) to print large objects with a particularly long dimension.

The dimensions of the apparatus 1 may be as follows, by way of example and not as a limitation: up to 1330 mm along the Z-axis (vertical), up to 2550 mm along the Y-axis (horizontal), up to 9800 mm along the X-axis (horizontal), keeping in mind that the first work plane 2 may be of modular construction with the possibility of adding modules in the direction of the X-axis as needed.

The additive manufacturing apparatus 1 may comprise, in particular, a gantry 5 arranged above the first work plane 2. The additive manufacturing apparatus 1 comprises movement means configured to perform a relative motion between the gantry 5 and the second work plane 3 along the X-axis (controlled axis of the CNC machine). In particular, the second work plane 3 may be fixed and the movement means may be configured to move the gantry 5 along the X axis. The gantry 5 may be movable along sliding guides parallel to the X axis and controlled by actuator means connected to the numerical control of the CNC machine.

The additive manufacturing apparatus 1 comprises a dispensing unit 6 carried by the gantry 5 and movable on the gantry 5 along the Y and Z axes. The X, Y, and Z axes may, in particular, be controlled axes of the CNC machine. The numerical control of the CNC machine may comprise, in particular, five controlled axes, i.e., also two rotary axes to control the spatial orientation of the dispensing unit 6. The five-axis numerical control system may, in particular, be substantially of a known type and is not described in further detail.

The dispensing unit 6 is configured to dispense a bead of material at least to the second work plane 3. The dispensing unit 6 may be configured, in particular, to deposit layers of material one on top of the other to produce the workpiece. Each layer may have, in particular, a thickness greater than or equal to 1 mm, for example approximately 4 mm. The dispensing unit 6 includes a dispensing nozzle. The dispensing unit 6 is connected to an extrusion system which may, in particular, be of a substantially known type and which is not described in further detail.

The first work plane 2 comprises at least one support portion 7. The first work plane 2 comprises two or three or four or more than four support portions 7 arranged in series one after the other along the X-axis. The first work plane 2 may comprise, in particular, two or more additional support portions 8 arranged in series one after the other along the X-axis. The series of two or more additional support portions 8 is arranged alongside the series of two or more support portions 7. Each of the two aforementioned series may be operationally associated with a respective sacrificial panel 4, or the same sacrificial panel could be associated with both series.

Each support portion 7 and/or each additional support portion 8 may comprise a beam extending longitudinally in the direction of the Y-axis and may be provided with a flat horizontal upper surface to support the workpiece. This upper support surface may be made of wood.

This specific example illustrates several support portions 7 (with some possible additional support portions 8), although it is possible to envisage the use of an even greater number of support portions 7 (and possible additional support portions 8). The first work plane 2 may be constructed in a modular manner. The attached figures illustrate a first work plane 2 with one module. In other examples, not illustrated, the first work plane 2 may comprise two, or three, or more than three modules, arranged one after the other in the direction of the X axis.

Each support portion 7 may be moved along the Z axis, or with at least one component of motion along the Z axis, independently of the other support portions 7. Each support portion 7 extends in length along the Y axis. The movement of each support portion 7 is controlled by respective linear and/or fluid-operated actuator means.

Similarly, each additional support portion 8 may be moved along the Z axis, or with at least one component of motion along the Z axis, independently of the other additional support portions 8 (and also of the support portions 7). Each additional support portion 8 extends lengthwise along the Y axis. The movement of each additional support portion 8 is controlled by respective linear and/or fluid-actuated actuator means.

Each support portion 7 may, in particular, be movable by actuation of an actuator 9 placed between two sliding guides 10 arranged side by side on which the respective support portion 7 slides. The actuator 9 may comprise, in particular, a linear actuator. The actuator 9 may comprise, in particular, a fluid-actuated actuator (e.g., a pneumatic cylinder). It is possible, in an example not illustrated, for each support portion 7 to be movable by actuation of two actuators arranged side by side.

For each support portion 7, the respective actuator means may be configured to stop the movement of the respective support portion 7 in an upper support position in which the support portion 7 supports at least one part of a piece being formed on the second work plane 3. In practice, for each support portion 7, it is possible to use a relatively very simple control system, since the control will only have to position the respective support portion 7 in the pre-set upper support position, starting from a lower position of disappearance, or of non-obstruction, in which the support portion 7 is lowered and in any case distant from the dispensing unit 6 above which deposits the production material of the piece, without any risk of interfering with the unit itself. The control will have to lift the support portion 7 to the upper position when, during the production of the piece, the dispensing unit 6 has moved in the direction of the X axis, moving away from the area above the respective support portion 7.

The additional support portions 8 are also movable along the Z-axis, or movable with at least one component of motion along the Z-axis, independently of each other and independently of the support portions 7. Each additional support portion 8 is movable under the control of respective additional linear and/or fluid-actuated actuator means, similar to the support portions 7.

Each support portion 7 and/or each additional support portion 8 may be moved in a vertical direction with a predefined maximum stroke, for example a maximum stroke greater than 20 mm and/or less than 80 mm, for example approximately 50 mm. The stroke control may be relatively imprecise, as movement with only two positions is possible, i.e. a lower rest or retracted or non-interference position, and an upper working or support position. The movement actuator may, in particular, be of the pneumatic type, although another type of actuator, for example electric, may be used.

Each support portion 7 and/or each additional support portion 8 may comprise, in particular, elastic means (for example, of a mechanical or pneumatic type) configured to push the respective support portion 7 and/or the respective additional support portion 8 upwards with a predefined force, so as to keep the respective support portion 7 and/or the respective additional support portion 8 pressed in contact against the workpiece.

The additive manufacturing apparatus 1 comprises programmable electronic control means configured to move each support portion 7 and/or each additional support portion 8 along the Z-axis, or with at least one motion component along the Z-axis, so as to position the respective support portion 7 and/or the respective additional support portion 8 in a support position in which it supports at least one part of a workpiece being formed on the second work plane 3.

The additive manufacturing apparatus 1 may comprise, in particular, at least one support body 11 extending in length along the Y-axis and positionable in a working position in which it is close to a (lower) edge of the second work plane 3 to support a workpiece being formed on the second work plane 3.

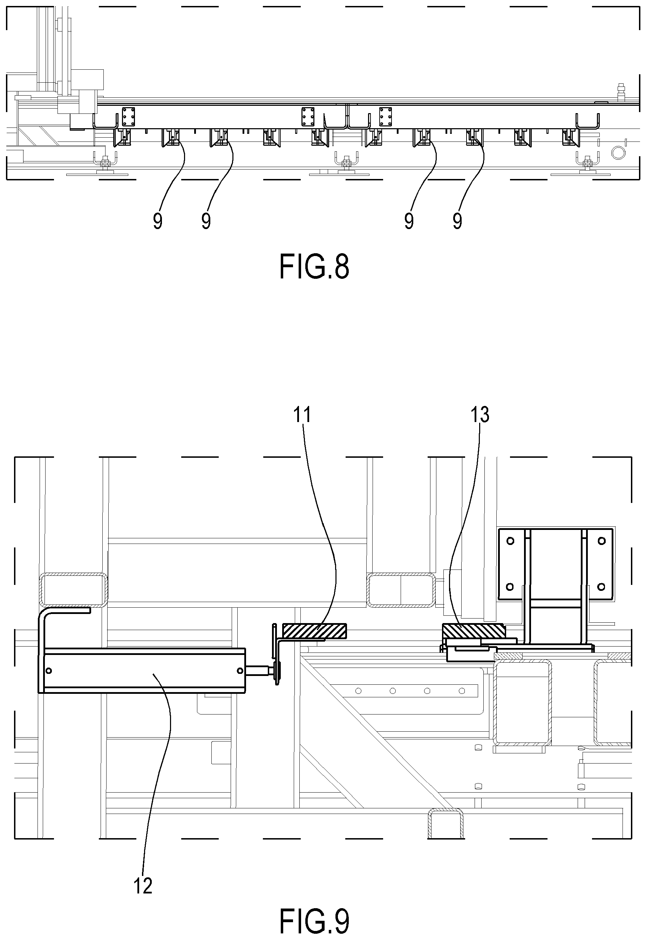

The support body 11 may be, in particular, movable along the X-axis, or with at least one motion component along the X-axis, with the possibility of assuming the aforementioned working position. (advanced) and at least one rest position (rearward, see Figure 9) in which it is distant from the lower edge of the second work plane 3. It is possible to envisage embodiments, not illustrated, in which the support body may be movable along the Z axis, or with at least one motion component along the Z axis, with the possibility of assuming the aforementioned working position (upper) and at least one rest position (lower) in which it is distant from the lower edge of the second work plane 3.

The support body 11 (which may be, for example, in the form of a sheet extended along the Y-axis so as to define a horizontal flat upper support surface) may be moved, in particular, by an actuator 12, in particular a linear and/or fluid-operated actuator (for example, a pneumatic cylinder).

The support body 11 may perform, in particular, the function of supporting the weight of the piece being formed on the second work plane 3 near the lower edge of the second work plane itself, i.e. in an area where, due to space constraints, the arrangement of one of the support portions 7 and/or one of the additional support portions 8 may not be envisaged.

The additive manufacturing apparatus 1 may comprise, in particular, a support element 13 movable along the X axis.

The support element 13 may be supported by the gantry 5 and be movable in solidarity with the gantry 5 along the X axis, as in this example, or (in examples not illustrated) it may be equipped with the ability to perform a movement along the X axis controlled by its own actuator means independently of the gantry 5.

The support element 13 (which may be, for example, in the form of a sheet extending along the Y axis so as to define a horizontal flat upper support surface) may be configured, in particular, to support at least one portion of a piece being formed on the second work plane 3. In particular, the support element 13 will support, from time to time, the part of the piece being formed that, at a certain moment in the production of the piece, is located between the dispensing unit 6, which at that moment is depositing a layer of material, and the last portion of support 7 that has been passed by the dispensing unit 6 and then raised into the support position to help support the piece.

The support element 13 may, in particular, slide on lateral sliding guides extending in the direction of the X-axis. The support element 13 may have, in particular, a recess (for example, in the shape of a step or indentation, see Figure 9) obtained on one edge (extending lengthwise in the direction of the Y-axis) of the flat upper support surface. This recess on the edge is located at a (vertical) dispensing plane on which the nozzle of the dispensing unit 6 operates. This recess on the edge allows for the prevention of a collision between the nozzle and the support element 13 during the movement of the nozzle.

Each support portion 7 and/or each additional support portion 8 may be provided, in particular, with respective braking means configured to lock it in the support position with the ability to support a load greater than a predetermined value, for example greater than 100 kg, or the weight of at least one supported portion of a piece being formed on the second work plane. In the specific example, each support portion 7 and/or each additional support portion 8 is locked in the support position with the ability to support a certain load (for example, at least approximately 200 kg). The braking means may comprise, in particular, at least one brake applied to the respective support portion 7 (for example a pair of pneumatic brakes) and/or at least one mechanical brake applied to the actuator means (for example a rod lock of the pneumatic cylinder).

In use, an additive manufacturing method comprises the step a) of providing the first work plane 2 (oriented along an XY plane, e.g. horizontal) and a second work plane 3 (oriented along a YZ plane, e.g. vertical).

The additive manufacturing method comprises the step b) of starting to deposit a bead of material on the second work plane 3 (in particular, on the sacrificial panel 4 fixed to the second work plane 3) by dispensing it from the dispensing unit 6 moved along the controlled Y and Z axes of the CNC machine to deposit a layer of a piece to be formed on the second work plane 3. In this initial phase, it is possible to foresee that the dispensing unit 6 deposits material in such a way as to generate an appendage that protrudes laterally from the layer of the piece being formed and that can be fixed (for example with screws) to the sacrificial panel 4.

The additive manufacturing method comprises the step c) of performing, after step b), a relative motion between the dispensing unit 6 and the second work plane 3 along the X axis, in particular by moving the gantry 5 that carries the dispensing unit 6.

The additive manufacturing method comprises the step d) of repeating the aforementioned steps b) and c) to continue producing the part that will extend layer by layer along the X-axis and will develop as a cantilever, protruding from the second work plane 3.

The additive manufacturing method comprises the step e) of providing two or more support portions 7 (and/or two or more additional support portions 8) arranged in the first work plane 2 one after the other along the X-axis, and the step f) of moving the support portions 7, each with a motion along the Z-axis (or with at least one component of motion along the Z-axis), sequentially one after the other, as the production of the part continues during step d) of layer-by-layer material deposition.

The support portions 7 (and/or the additional support portions 8) are raised in sequence, each starting from its own lower position of disappearance or non-interference, so as to place each support portion 7 in the upper support position, in which it can support the weight of a part of the piece that has just been formed, when the dispensing unit 6 has already operated in the area above the support portion 7 and therefore there is no longer the risk of interference or collision between the dispensing unit 6 and the support portion 7 in the raised position.

In the initial phase, it is possible to foresee that the additive manufacturing method comprises the step of moving the support body 11 (in particular along the X axis or with at least one motion component along the X axis, or along the Z axis or with at least one motion component along the Z axis), from a rest position, in which it is distant from the lower edge of the second work plane 3, to a working position, in which it is close to the lower edge of the second work plane 3 and can support at least a portion of the piece being formed on the second work plane 3. The support body 11 operates in the area close to the lower edge of the second work plane 3, intervening to support the weight of the piece being formed in the initial phase of the production of the piece, in practice taking over from the support element 13 which moves along the X axis, after which the various support portions 7 will take over from the support element 13, intervening however from the bottom upwards without generating substantially any sliding friction.

It is observed that the support element 13, which is carried by the gantry 5 and which therefore follows the dispensing unit 6 in its movement along the X axis, is arranged in such a way as to support, during the production of the piece, the part of the piece being formed which from time to time is found in proximity to the vertical deposition plane along which the dispensing unit 6 is depositing the layer of material.

The additive manufacturing method comprises the step of locking each support portion in the support position by means of a brake in order to be able to support a load exceeding a certain value (for example, exceeding 100 kg), i.e. the weight of at least one portion of a piece being formed on the second work plane 3.

The aforementioned step c) may involve leaving the second work plane 3 stationary and moving the dispensing unit along the X axis. The dispensing unit 6 may be carried by the gantry 5, moving along the X axis.

As mentioned, it may be possible to envisage, in particular, the use of a support element 13 movable in solidarity with the gantry along the X axis. The support element 13 follows the movement of the dispensing unit 6, therefore it is always located below the vertical plane in correspondence with which the dispensing unit 6 deposits the production material, therefore the support element 13 will be essentially responsible for carrying out the function of initially supporting the material recently deposited by the dispensing unit 6 and therefore still to be solidified. The support element 13 defines a horizontal flat support surface that supports the lower part of the layer that has just been printed, so that, in practice, the piece being formed, which progressively extends in cantilever form from the second work plane 3, elongating in the direction of the horizontal X-axis, is supported by the support element 13 with respect to the portion of the piece extending less than 300 mm along the X-axis, i.e. the distance or step between two consecutive support portions 7, while the remaining portion of the piece is supported by the support portions 7 that have already been passed by the dispensing unit 6 during the progressive formation of the piece along the X-axis.

## Claims

1. Additive manufacturing apparatus, comprising:
- a first work plane (2) oriented along an XY plane;
- a second work plane (3) oriented along a YZ plane;
- a dispensing unit (6) movable along the Y and Z axes and configured to dispense material to the second work plane (3);
- moving means configured for relative motion between said dispensing unit (6) and said second work plane (3) along an X axis;
**characterized in that** said first work plane (2) comprises at least one support portion (7) that is movable along said Z axis, or movable with at least one motion component along said Z axis.

2. Apparatus according to claim 1, comprising two or three or four or more than four support portions (7) arranged one after the other along said X-axis and movable along said Z-axis, or movable with at least one motion component along said Z-axis, independently of each other.

3. Apparatus according to claim 1 or 2, wherein:
- each of said support portions (7) extends in length along said Y-axis; and/or
- each of said support portions (7) is movable along said Z-axis, or movable with at least one motion component along said Z-axis, controlled by respective actuator means (9) of a linear and/or fluid-actuated type; and/or
- said apparatus comprises electronic control means configured to move each of said support portions (7) along said Z-axis, or with at least one motion component along said Z-axis, so as to position the respective support portion (7) in a support position in which the respective support portion (7) supports at least a portion of a workpiece being formed on said second work plane (3).

4. Apparatus according to any one of the preceding claims, comprising a support body (11) extending in length along said Y-axis and positionable in a working position in which said support body (11) is close to an edge of said second work plane (3) to support a workpiece being formed on said second work plane (3); wherein, in particular, said support body (11) is movable, in particular along said X-axis or with at least one motion component along said X-axis or along said Z-axis or with at least one motion component along said Z-axis, with the possibility of assuming said working position and at least one rest position in which said support body (11) is distant from said edge of said second working plane (3).

5. Apparatus according to any one of the preceding claims, wherein said second work plane (3) is fixed and said moving means is configured to move said dispensing unit (6) along said X-axis.

6. Apparatus according to any one of the preceding claims, comprising a gantry (5) which is arranged above said first work plane (2) and which carries said dispensing unit (6) movable on said gantry (5) along said axes Y and Z, said moving means being configured to move said gantry (5) with respect to said second work plane (3) along said axis X; said apparatus comprising, in particular, a support element (13) movable along said X-axis and configured to support at least one portion of a piece being formed; said support element (13) being, in particular, carried by said gantry (5) and movable in solidarity with said gantry (5).

7. Apparatus according to any one of the preceding claims, wherein each of said support portions (7) is movable along said Z-axis, or is movable with at least one component of motion along said Z-axis, operated by an actuator (9) interposed between two sliding guides (10) arranged side by side on which the respective support portion (7) slides, or is movable along said Z-axis, or is movable with at least one component of motion along said Z-axis, operated by two actuators arranged side by side.

8. Apparatus according to any one of the preceding claims, wherein said first work plane (2) comprises one or two or three or four or more than four further support portions (8) arranged along said X-axis one after the other alongside said support portions (7), said further support portions (8) being movable along said Z-axis, or movable with at least one component of motion along said Z-axis, independently of each other; wherein, in particular, each of said further support portions (8) is movable along said Z-axis, or movable with at least one motion component along said Z-axis, controlled by respective linear and/or fluid-actuated actuator means.

9. Apparatus according to any one of the preceding claims, wherein said X-axis is horizontal and/or said Y-axis is horizontal and/or said Z-axis is vertical and/or said X-axis is orthogonal to said Y-axis and/or said X-axis is orthogonal to said Z-axis and/or said Y-axis is orthogonal to said Z-axis.

10. Apparatus according to any one of the preceding claims, wherein each of said support portions (7) is provided with at least one respective brake configured to lock the respective support portion (7) in a support position in which the respective support portion (7) can support a predefined load, for example greater than 100 kg, i.e. a weight of at least a portion of a piece being formed on said second work plane (3).

11. Additive manufacturing method comprising the steps of:
a) providing a first work plane (2) oriented along an XY plane and a second work plane (3) oriented along a YZ plane;
b) depositing material on said second work plane (3) dispensing the material from a dispensing unit (6) moved along the Y and Z axes to form a layer of a piece to be produced;
c) after said step b), performing a relative motion between said dispensing unit (6) and said second work plane (3) along an X axis;
d) repeating said steps b) and c) to continue producing said piece which will extend layer after layer along said X-axis;
e) providing at least one support portion (7) arranged in said first work plane (2);
f) moving said at least one support portion (7), with a motion along said Z-axis, or with at least one motion component along said Z-axis, so as to position said at least one support portion (7) in a support position in which it supports the weight of a part of the piece being produced on said second work plane (3).

12. Method according to claim 11, wherein said step of providing at least one support portion (7) comprises providing two or three or four or more than four support portions (7) arranged one after the other along said X-axis, and wherein said step of moving said at least one support portion (7) comprises moving said support portions (7) one after the other as production of said workpiece continues in said step d) so as to position each of said support portions (7) in a support position in which it supports the weight of a part of the workpiece being produced on said second work plane (3).

13. Method according to claim 11 or 12, comprising, before said step f), the step of moving a support body (11) along said X-axis, or with at least one motion component along said X-axis, from a rest position, in which said support body (11) is distant from an edge of said second work plane (3), to a working position, in which said support body (11) is close to said edge of said second work plane (3) and supports at least an initial portion of said workpiece on said second work plane (3), said support body (11) being extended in length along said Y-axis.

14. Method according to any one of claims 11 to 13, comprising the step of locking each support portion (7) in a support position where the support portion (7) can support a load greater than a predefined value, e.g. 100 kg, i.e. a weight of at least one portion of a piece being produced.

15. Method according to any one of claims 11 to 14, wherein said step c) comprises leaving said second work plane (3) stationary and moving said dispensing unit (6) along said X-axis; wherein, in particular, said dispensing unit (6) is carried by a gantry (5) moving along said X-axis, a support element (13) being provided which is movable in solidarity with said gantry (5) along said X-axis and which, during said step b), supports at least one portion of a piece being produced on said second work plane (3).
